(19) Europäisches Patentamt

European Patent Office

Office européen des brevets

(11) **EP 0 766 436 B1**

(12) **FASCICULE DE BREVET EUROPEEN**

(45) Date de publication et mention
de la délivrance du brevet:
**21.05.2003 Bulletin 2003/21**

(51) Int Cl.⁷: **H04M 1/60**, H04M 1/76

(21) Numéro de dépôt: **96202619.1**

(22) Date de dépôt: **19.09.1996**

(54) **Circuit pour poste téléphonique comportant une alimentation de diode électro-luminescente**

Schaltung für ein Fernsprechgerät mit einer Leuchtdiodenstromversorgung

Circuit for a telephone set comprising a light emitting diode power supply

(84) Etats contractants désignés:
**DE FR GB IT**

(30) Priorité: **29.09.1995 FR 9511498**

(43) Date de publication de la demande:
**02.04.1997 Bulletin 1997/14**

(73) Titulaire: **Koninklijke Philips Electronics N.V.**
**5621 BA Eindhoven (NL)**

(72) Inventeur: **Courtois, Fernand**
**75008 Paris (FR)**

(74) Mandataire: **Charpail, François et al**
**Société Civile S.P.I.D.**
**156, Boulevard Haussmann**
**75008 Paris (FR)**

(56) Documents cités:
**EP-A- 0 700 191**     **US-A- 4 564 729**
**US-A- 4 648 109**     **US-A- 5 280 523**

- **PATENT ABSTRACTS OF JAPAN vol. 012, no. 127 (E-602), 20 Avril 1988 & JP-A-62 252257 (NEC CORP)**
- **PATENT ABSTRACTS OF JAPAN vol. 012, no. 207 (E-621), 14 Juin 1988 & JP-A-63 005650 (NEC CORP)**
- **PATENT ABSTRACTS OF JAPAN vol. 012, no. 246 (E-632), 12 Juillet 1988 & JP-A-63 033950 (NEC CORP)**

## Description

La présente invention concerne un circuit pour un appareil destiné à être connecté à une ligne téléphonique, comportant un dispositif d'alimentation par la ligne d'une diode électroluminescente servant d'indicateur de fonctionnepient, appareil qui est également muni d'un transistor régulateur dont le trajet de courant est en série avec une résistance de mesure de courant de ligne.

Un circuit comportant un tel transistor régulateur de tension est connu du document US 4,564,729. La diode est ici introduite en série avec le transistor régulateur et la résistance de mesure de courant de ligne. La présence de la diode en série induit de fortes perturbations pour la mesure de courant de ligne dans la résistance de mesure. Alimenté lui-même par le courant de ligne, un tel circuit assure la majeure partie des fonctions de réception et d'émission d'un poste téléphonique, en association avec quelques composants externes dont le choix permet d'assurer un réglage des conditions de fonctionnement du poste. La résistance de mesure de courant mentionnée précédemment fait partie de ces composants externes, et permet entre autres, un réglage du gain des amplificateurs d'émission et de réception en fonction du courant absorbé sur la ligne, et donc en relation avec la longueur de la ligne.

L'alimentation par le courant de ligne d'une diode électroluminescente en tant qu'indicateur de fonctionnement, pose certaines difficultés lorsque cette diode est mise en oeuvre dans un poste téléphonique équipé d'un circuit de transmission tel qu'indiqué ci-dessus du fait que le courant parcourant cette diode peut entraîner des perturbations importantes dans le fonctionnement du poste téléphonique si des précautions particulières ne sont pas observées.

En particulier, le courant d'alimentation de la diode électroluminescente ne doit pas modifier l'impédance d'entrée dynamique du poste, ni modifier les réglages de gain prévus par le circuit de transmission. De plus, la chute de tension relativement élevée d'une diode électro-luminescente, de l'ordre de 2 volts, est susceptible de réduire l'excursion possible de tension aux bornes de la ligne et en conséquence, d'introduire une distorsion inacceptable des signaux d'émission ou de réception.

L'invention a donc pour but de fournir une solution au problème posé par l'alimentation d'une diode électroluminescente dans un poste équipé d'un circuit de transmission, en proposant un circuit dont les éléments concernant l'alimentation de cette diode soient aisément intégrables en même temps que le circuit de transmission. Un tel circuit selon l'invention vise à exploiter au mieux le courant disponible sur la ligne téléphonique sans pour autant introduire de perturbation sensible du fonctionnement du poste et en particulier sans modification des réglages de gain des amplificateurs ni d'augmentation de distorsion des signaux transmis.

A cet effet, un circuit tel que défini dans le paragraphe introductif, est, selon l'invention, caractérisé en ce que le trajet de courant du transistor régulateur forme une branche disposée en parallèle sur la ligne, transistor régulateur qui fixe aux bornes de son trajet principal de courant une tension de valeur moyenne constante, en ce que le dispositif d'alimentation comprend une source de courant variable en série avec la diode électro-luminescente, l'ensemble de ces deux éléments étant connecté en parallèle sur le trajet principal de courant du transistor régulateur, et en ce que la source de courant variable, recevant un signal de contrôle déduit de la chute de tension dans la résistance de mesure de courant de ligne, est agencée pour débiter un courant d'alimentation ayant une valeur nominale prédéterminée lorsque le courant de ligne moyen est égal ou supérieur à un seuil de courant, et pour ne pas débiter lorsque le courant de ligne moyen est inférieur audit seuil de courant.

L'ensemble de la source de courant variable et de la diode électroluminescente forme une branche connectée en parallèle sur le trajet principal de courant du transistor régulateur de sorte que le courant dérivé dans cette branche passe dans la résistance de mesure de courant. Ainsi, cette résistance reçoit bien le courant total absorbé sur la ligne et de ce fait, les commandes de gain des amplificateurs d'émission et de réception ne sont pas perturbées.

Une variante de l'invention présente un circuit tel que défini dans le paragraphe introductif, caractérisé en ce que le trajet de courant du transistor régulateur forme une branche disposée en parallèle sur la ligne, transistor régulateur qui fixe aux bornes de son trajet principal de courant une tension de valeur moyenne constante, en ce que le dispositif d'alimentation comprend une source de courant variable en série avec la diode électroluminescente, l'ensemble de ces deux éléments étant connecté en parallèle sur le trajet principal de courant du transistor régulateur, et en ce que la source de courant variable, recevant un signal de contrôle déduit de la chute de tension dans la résistance de mesure de courant de ligne, est agencée pour débiter un courant d'alimentation maximum prédéterminé lorsque le courant de ligne moyen est égal ou supérieur à un premier seuil de courant, pour ne pas débiter lorsque le courant de ligne moyen est égal ou inférieur à un deuxième seuil de courant, qui est inférieur au premier seuil, et pour débiter un courant d'alimentation variant avec le courant de ligne moyen entre le premier et le deuxième seuil de courant.

Le fait que le courant délivré par la source de courant variable ait une valeur qui varie en fonction du courant disponible sur la ligne réalise un compromis avantageux entre une indication lumineuse de fonctionnement nettement visible et un maintien des fonctions essentielles du poste, lesquelles sont assurées en priorité lorsque le courant disponible sur la ligne est trop faible pour pouvoir alimenter la diode électroluminescente. Par ailleurs, une extinction de la diode électroluminescente ou une émission lumineuse faible représentent également en soi une information sur l'état de la ligne qui peut être utile pour l'utilisateur.

De préférence, la valeur du courant débité par la source de courant variable est une fonction linéaire du courant de ligne moyen entre le premier et le deuxième seuil de courant de sorte que l'indication visuelle de fonctionnement est proportionnée au courant de ligne disponible lorsqu'il dépasse le deuxième seuil de courant.

Selon un mode préféré de réalisation du circuit selon l'invention, la source de courant variable comprend un générateur de courant ajustable par le signal de contrôle, fournissant en sortie un courant dit de commande dans une résistance de charge, ainsi qu'un amplificateur de type transconductance, dont une entrée est couplée à la résistance de charge et qui délivre en sortie un courant constituant le courant d'alimentation de la diode électro-luminescente, proportionnel au dit courant de commande.

Ce mode de mise en oeuvre présente l'avantage que la partie du circuit produisant le signal de commande peut être conçue pour fonctionner à des niveaux de courant très bas de sorte qu'il ne soit pas nécessaire de prendre en compte ces courants dans la résistance de mesure de courant. En ce qui concerne l'amplificateur au contraire, celui-ci est destiné à fournir un courant d'alimentation significatif par rapport au courant de ligne, de sorte qu'il est prévu que ce courant traverse la résistance de mesure de courant. Une borne de référence de cet amplificateur ainsi qu'une borne de la résistance dite de charge, qui doit nécessairement présenter la même référence de tension, se trouvent donc connectées à la résistance de mesure de courant.

Le circuit selon l'invention, tel qu'il a été défini jusqu'ici, assure une alimentation optimale de la diode électroluminescente par un courant moyen, dont la valeur dépend essentiellement de la tension d'alimentation de la ligne, de l'impédance de ligne et de l'impédance de l'alimentation. Toutefois, dans le cas où le signal de tension alternative émis sur la ligne est de forte amplitude, il peut se produire que la tension aux bornes de la source de courant variable devienne momentanément insuffisante pour que cette source puisse continuer à fonctionner de manière convenable. Ceci peut en général entraîner une distorsion inadmissible du signal d'émission.

C'est pourquoi, selon un mode de mise en oeuvre complémentaire de l'invention, il est prévu une commutation de la source de courant variable telle que cette commutation assure la coupure du courant d'alimentation de la diode électroluminescente en fonction de la valeur instantanée de la tension de ligne, lorsque cette tension devient insuffisante.

En effet, selon ce mode de mise en oeuvre, le circuit selon l'invention est caractérisé en ce qu'il comporte en outre un comparateur recevant en entrée la valeur de la chute de tension instantanée aux bornes de la source de courant variable, chute de tension à comparer à un seuil de tension, et en ce que la sortie du comparateur est couplée à un dispositif de blocage de la source de courant variable qui provoque la suppression du courant délivré par cette source de courant variable lorsque la chute de tension instantanée aux bornes de celle-ci est inférieure au dit seuil de tension.

Un dispositif de blocage de la source de courant variable peut être simplement constitué par la résistance de charge dont la chute de tension peut être annulée par la sortie du comparateur. Pour éviter toute oscillation du circuit due à la coupure du courant dans la diode électroluminescente, le comparateur est de préférence d'un type à effet d'hystérésis.

Enfin, pour éviter que se produise un saut de tension brutal égal à la chute de tension dans la diode électroluminescente au moment de la coupure de son courant d'alimentation, l'invention prévoit avantageusement qu'une résistance soit disposée en shunt aux bornes de la source de courant variable.

L'invention concerne également un poste téléphonique destiné à être connecté à une ligne téléphonique bifilaire comprenant :

- un pont redresseur présentant deux bornes destinées chacune à être reliée à l'un des fils constituant la ligne téléphonique, et une borne positive et une borne négative entre lesquelles le pont diviseur délivre une tension positive,
- un interrupteur présentant une première borne reliée à la borne positive du pont diviseur et une deuxième borne,
- un module dit d'interface présentant une première borne d'alimentation reliée à la borne négative du pont diviseur, une deuxième borne d'alimentation reliée à la deuxième borne de l'interrupteur et une borne de sortie destinée à délivrer une tension locale d'alimentation, module d'interface destiné à transmettre des signaux vers la ligne téléphonique et présentant à cet effet une borne d'entrée,
- un module dit émetteur présentant une première borne d'alimentation reliée à la borne négative du pont diviseur et une deuxième borne d'alimentation reliée à la borne de sortie du module d'interface, et une borne de sortie destinée à délivrer un signal d'émission,

caractérisé en ce que le circuit d'interface comporte :

- un circuit tel que décrit plus haut, dans lequel le trajet de courant du transistor régulateur, en série avec la résistance de mesure du courant de ligne, forme une branche disposée entre les première et deuxième bornes d'alimentation, le transistor régulateur étant commandé au moyen du signal d'émission issu du module émetteur et reçu sur la borne d'entrée du module d'interface, et

. une résistance et un condensateur disposés en série entre la première et la deuxième bornes d'alimentation, le noeud intermédiaire entre la résistance et le condensateur constituant la borne de sortie du module d'interface.

Il faut noter qu'il existe en outre un circuit comportant un tel transistor régulateur de tension agissant par absorption de courant sur la ligne de téléphone bien connu et largement utilisé sous forme d'un circuit intégré, dit de transmission, par exemple le circuit portant la référence TEA1062, commercialisé par la Société Philips. Ce circuit inclut un transistor régulateur tel que, en plus des caractéristiques d'un circuit selon le paragraphe introductif, le trajet de courant du transistor régulateur forme une branche disposée en parallèle sur la ligne, transistor régulateur qui fixe aux bornes de son trajet principal de courant une tension de valeur moyenne constante.

La description qui va suivre en regard des dessins annexés, le tout donné à titre non limitatif, fera bien comprendre en quoi consiste l'invention et comment elle peut être réalisée.

La figure 1 présente un schéma électrique général et simplifié du circuit selon l'invention,

la figure 2 donne un schéma électrique plus détaillé d'une partie du circuit de la figure 1,

la figure 3 donne le schéma d'un exemple de réalisation d'un générateur de courant utilisé dans le circuit selon l'invention

la figure 4 montre une courbe de variation de courant d'alimentation d'une diode électroluminescente en fonction du courant disponible sur la ligne,

la figure 5 représente le schéma électrique d'une portion de circuit équivalente à celle de la figure 2, dans un mode de mise en oeuvre avantageux de l'invention, et

la figure 6 représente un schéma électrique partiel d'un poste téléphonique mettant en oeuvre un circuit conforme à l'invention.

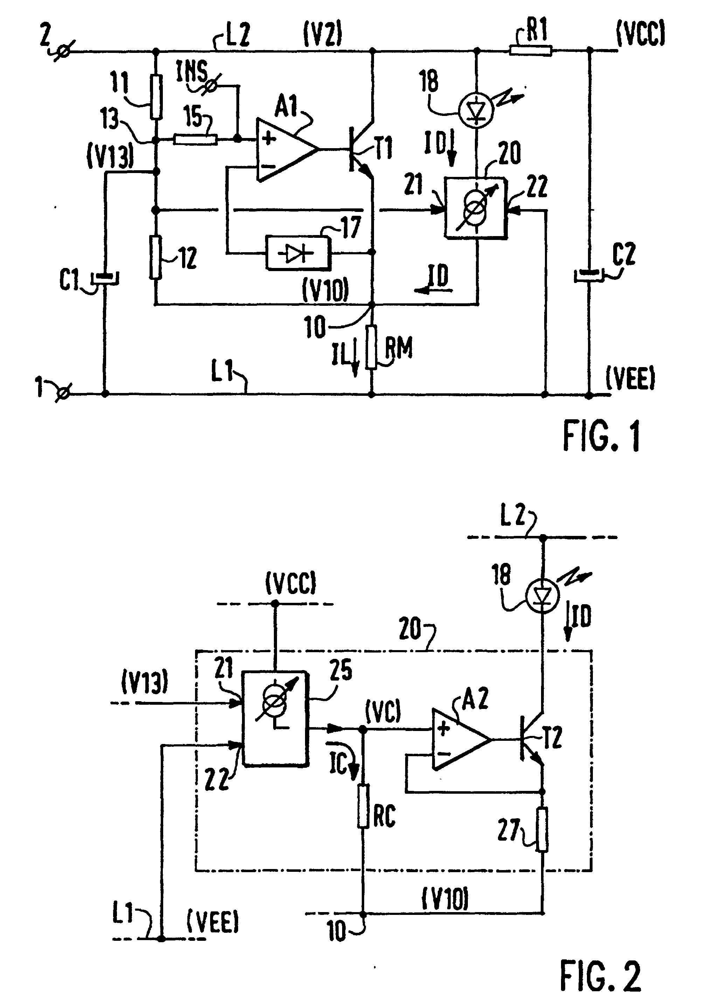

Le circuit pour poste téléphonique représenté à la figure 1 est prévu pour être connecté à deux bornes 1 et 2 d'une ligne téléphonique, en aval des dispositifs usuels de protection contre les surtensions et d'un pont de diodes assurant une polarité fixée aux extrémités de la ligne. Ainsi la borne 1 correspond au fil de ligne le plus négatif auquel est connecté une extrémité de ligne L1 qui sert de tension de référence VEE alors que la borne 2 correspond au fil de ligne à tension positive auquel est connecté une extrémité de ligne L2 à tension positive.

Le circuit comporte, de manière connue, un transistor régulateur T1, de type NPN, dont le trajet de courant, en série avec une résistance de mesure de courant de ligne RM forme une branche disposée en parallèle sur les extrémités de ligne L1 et L2. La liaison entre l'émetteur du transistor T1 et la résistance RM forme un noeud 10 portant une tension V10.

Le transistor T1 fixe aux bornes de son trajet émetteur-collecteur une tension dont la valeur moyenne est constante. Pour réaliser cette fonction, un pont diviseur formé de deux résistances 11 et 12 en série est disposé entre l'extrémité de ligne L2 et le noeud 10. Le point intermédiaire de ce pont de résistances 11, 12 forme un noeud 13 qui est couplé à l'entrée non inverseuse d'un amplificateur A1 via une résistance d'entrée 15. La tension du noeud 13 est par ailleurs stabilisée au moyen d'un condensateur C1 relié à l'extrémité de ligne L1 servant de référence de tension. La résistance d'entrée 15 a pour rôle de permettre un découplage du signal d'émission introduit sur une borne INS qui est connectée à l'entrée non inverseuse de l'amplificateur A1.

En l'absence de signal d'émission, la tension du noeud 13 se retrouve pratiquement appliquée sur l'entrée non inverseuse de l'amplificateur A1. L'entrée inverseuse de l'amplificateur A1 est couplée au noeud 10 via un dispositif décaleur de tension 17. Il assure que la tension de l'entrée inverseuse de l'amplificateur A1 soit égale à la tension du noeud 10 augmentée d'une ou plusieurs chutes de tension de diode en direct.

En désignant par V17 l'écart de tension produit par le dispositif 17 et par V2 la tension moyenne de l'extrémité de ligne L2, on peut écrire :

$$V13 - V10 = (V2 - V10).R12/(R11 + R12) \approx V17$$

et inversement :

$$V2 - V10 \approx V17.(R11 + R12)/R12$$

ce qui justifie le fait que le transistor régulateur T1 produise une tension moyenne émetteur-collecteur sensiblement constante. La tension V10 du noeud 10 comporte une composante continue qui sert, de manière connue, à régler le gain des amplificateurs d'émission et de réception du poste téléphonique, selon une disposition non représentée sur la figure. La tension V10 correspond en effet, à une mesure du courant de ligne dans 1a résistance RM et permet donc une estimation de l'impédance de la ligne téléphonique et une compensation de son atténuation.

L'extrémité de ligne L2 est couplée à l'extrémité L1 servant de référence, au moyen d'une résistance R1 en série avec une capacité C2 de stockage de forte valeur. La résistance R1 détermine très sensiblement l'impédance d'entrée du poste téléphonique vu du côté de la ligne, cette résistance ayant une valeur de l'ordre de 600$\Omega$. Les autres impédances connectées sur la ligne, entre autres la résistance 11, présentent une valeur beaucoup plus élevée que R1 et entraînent une consommation négligeable. Le noeud entre la résistance R1 et la capacité de stockage C2 présente une tension VCC servant à alimenter les différentes fonctionnalités du circuit autres que celles décrites sur la figure. On remarque à ce propos que le courant consommé sur cette source de tension VCC ne circule pas dans la résistance de mesure du courant RM c'est pourquoi la consommation sur cette source de tension est nécessairement limitée à un courant faible.

Le circuit décrit jusqu'à présent est connu et utilisé dans un circuit intégré dit de transmission vendu sous la référence TEA1062 commercialisé par le société PHILIPS.

Avec ce circuit intégré, une manière connue d'alimenter une diode électroluminescente à partir du courant de ligne consiste à prévoir une source de courant fixe en série avec ladite diode électroluminescente, le tout étant connecté entre les extrémités 1 et 2 de la ligne téléphonique.

Il est clair que cette solution ne donne pas entièrement satisfaction du fait que le courant de la diode électroluminescente ne traverse pas la résistance de mesure de courant RM et en conséquence les réglages de gain des amplificateurs d'émission et de réception, se trouvent perturbés.

Selon l'invention au contraire, et conformément à la figure 1, l'alimentation d'une diode électroluminescente 18 est assurée par une source de courant variable 20, laquelle, en série avec la diode 18 forme un ensemble connecté en parallèle sur le trajet émetteur/collecteur du transistor T1. De ce fait, le courant ID traversant la diode 18 passe dans la résistance de mesure de courant RM et est donc pris en compte pour les réglages assurés par la tension V10 du noeud 10.

La source de courant variable 20 a une entrée 21 connectée au noeud 13 et une autre entrée 22 connectée à l'extrémité de ligne L1. La différence de tension présentée entre les bornes d'entrée 21 et 22 forme un signal de contrôle qui est significatif du courant de ligne puisque, comme on l'a vu précédemment, la tension V13 du noeud 13 est la somme d'une tension fixée par le dispositif décaleur de tension 17 et de la tension V10 du noeud 10 présentant une chute de tension proportionnelle au courant de ligne. La source de courant variable 20 est agencée de manière à débiter un courant ID d'alimentation de la diode 18 dont la valeur maximale est fixée lorsque le courant de ligne moyen est égal ou supérieur à un premier seuil de courant, et pour ne pas débiter lorsque le courant de ligne moyen est égal ou inférieur à un deuxième seuil de courant, lequel est inférieur au premier seuil.

Entre le deuxième seuil et le premier seuil de courant de ligne, la source de courant variable 20 débite un courant qui varie progressivement.

Dans un mode de réalisation préféré de l'invention, cette variation est linéaire.

Le couplage entre le courant débité par la source de courant variable 20 et la tension d'émetteur du transistor T1, couplage obtenu par la résistance de mesure de courant RM, entraîne que le courant d'alimentation de la diode 18 est soustrait du courant que débiterait le courant du transistor T1 en l'absence d'alimentation d'une telle diode.

Ainsi, le courant de ligne IL dans la mesure ou il est suffisant, est partagé entre la diode 18 et le transistor régulateur T1. Ceci assure un fonctionnement optimal du circuit en fonction du courant disponible sur la ligne mais prévoit qu'une priorité d'alimentation est acordée en faveur d'une exploitation de signal sans distorsion lorsque le courant de ligne disponible est relativement faible.

A titre d'exemple, le premier seuil de courant de ligne peut être fixé à 75mA tandis que le deuxième seuil en dessous duquel la source de courant variable 20 ne débite plus peut être fixé à un courant de ligne de 15mA.

La figure 2 montre le principe d'un exemple de réalisation d'une source de courant variable telle que la source 20 de la figure 1. Sur cette figure, les éléments communs avec ceux de la figure 1 et ayant les mêmes fonctions sont affectés de signes de référence identiques.

La source de courant variable 20 est représentée à l'intérieur d'un cadre en traits mixtes. Elle comporte un générateur de courant ajustable 25 en fonction des tensions fournies sur les entrées 21 et 22, tensions dont la différence est représentative du courant de ligne, au décalage de tension près du dispositif 17 (figure 1).

Le générateur de courant ajustable 25 fournit en sortie un courant de commande IC qui alimente une résistance de charge RC, référencée au noeud 10 portant la tension V10. La chute de tension sur la résistance de charge RC est appliquée à l'entrée non inverseuse d'un amplificateur A2 dont la sortie commande un transistor NPN, T2, dont l'émetteur est couplé en contre-réaction sur l'entrée inverseuse de l'amplificateur A2. Une résistance 27 relie l'émetteur du transistor T2 au noeud 10, tandis que le collecteur du transistor T2 fournit le courant d'alimentation ID destiné à la diode électroluminescente 18.

La structure de la source de courant variable 20 présente la particularité avantageuse que le générateur de courant ajustable 25 peut être alimenté par la source de tension VCC si le courant consommé par ce générateur reste suffisamment faible pour être négligeable devant le courant de ligne. Il est possible également de référencer ce générateur 25 à la tension VEE de l'extrémité de ligne L1 sans que le courant consommé par ce générateur ne soit pris en compte par la résistance de mesure de courant RM (figure 1).

Le transistor T2 au contraire, débite un courant qui est variable et relativement important par comparaison avec le courant total de ligne de sorte que sa référence est le noeud 10 et que ce courant est pris en compte dans la résistance de mesure de courant RM. Pour assurer convenablement la fonction d'amplification en puissance de l'ensemble amplificateur A2 et transistor T2, la résistance de charge est également référencée au noeud 10. Le rapport entre la résistance de charge RC et la résistance d'émetteur 27 du transistor T2 fixe le facteur de multiplication en courant du courant de commande IC qui peut être par exemple de l'ordre de 1000.

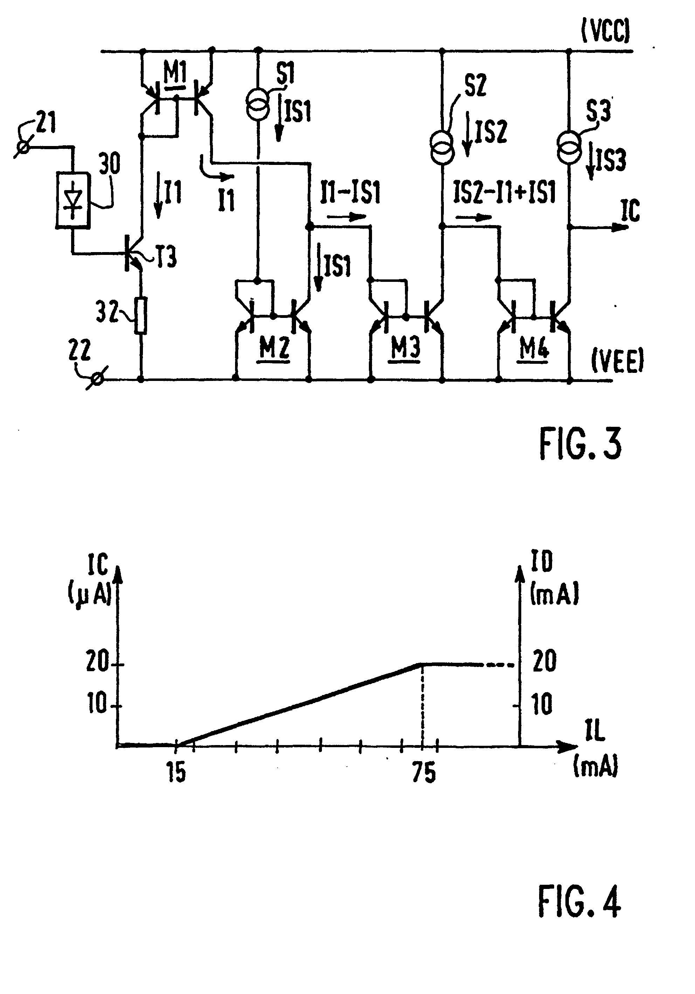

Un exemple de réalisation détaillé du générateur de courant ajustable 25 est représenté à la figure 3. L'entrée de commande 21 de ce générateur porte la tension V13 du noeud 13 visible à la figure 1.

Comme on l'a vu précédemment, cette tension V13 est égale à la tension V10 du noeud 10 augmentée d'un écart de tension fixé par le dispositif décaleur de tension 17.

Un dispositif décaleur de tension 30 est inséré entre l'entrée de commande 21 et la base d'un transistor T3 de type NPN, dont la valeur est telle que sur l'émetteur du transistor T3 soit obtenue une tension égale à la tension V10 du noeud 10. Cette tension V10 par rapport à la tension VEE prise comme référence, représente la valeur du courant de ligne à une échelle donnée par la résistance de mesure de courant RM. L'émetteur du transistor T3 est couplé à l'entrée de contrôle 22 qui n'est autre que la tension de référence VEE, au moyen d'une résistance d'émetteur 32. En choississant une valeur élevée pour la résistance d'émetteur 32 par rapport à la résistance de mesure de courant RM, on réalise une copie du courant de ligne dans le transistor T3 à une échelle qui peut être considérablement réduite, par exemple d'un facteur 3000.

Le courant I1 ainsi créé, en négligeant la perte due au courant de base, est renvoyé par un miroir de courant M1, à transistors de type PNP, à la sortie d'un deuxième miroir de courant M2 dont l'entrée est alimentée par une source de courant Si débitant un courant IS1. Le miroir de courant M1 et la source de courant Si sont alimentés à partir du point d'alimentation de tension VCC tel que défini dans le circuit de la figure 1.

La sortie du miroir de courant M2, produit un courant égal à la différence I1 - IS1 qui est appliqué à l'entrée d'un troisième miroir de courant M3. Il est à noter que dans ce montage, la différence I1 - IS1 ne peut pas être négative et que le courant à la sortie du miroir de courant M3 est donc nul si I1 est inférieur à IS1, et positif lorsque I1 est supérieur à IS1. I1 étant une reproduction du courant de ligne à une échelle très petite, le courant IS1 de la source S1 représente à la même échelle le deuxième seuil de courant, en dessous duquel le générateur de courant ajustable 25 ne fournit aucun courant.

Une source de courant S2 débitant un courant IS2 est couplée à la sortie du miroir de courant M3, la sortie de l'ensemble fournissant un courant de valeur égale à IS2 - (I1 - IS1). Ce courant est appliqué à l'entrée d'un quatrième miroir de courant M4 à la sortie duquel est appliqué le courant IS3 d'une troisième source de courant S3 selon un processus analogue aux étages de miroirs précédents. Ainsi, la sortie du miroir de courant M4 délivre un courant de commande IC dont la valeur est égale à IS3 - IS2 + (I1 - IS1). Lorsque I1 est nettement plus élevé que IS1, c'est-à-dire quant le courant de ligne est important, la différence IS2 - (I1 - IS1) qui exprime le courant à l'entrée du miroir de courant M4 ne peut pas être négative, de sorte que le courant IC a une valeur limitée au courant IS3, qui représente à petite échelle la valeur du seuil de courant au dessus duquel le courant d'alimentation de la diode électroluminescente sera limité.

Par ailleurs, pour que le courant IC soit nul lorsque I1 = IS1, il suffit que les courants IS2 et IS3, produits par les sources de courant S2 et S3, soient égaux.

A titre d'exemple, le courant IS1 peut avoir une valeur de 5μA alors que les courants IS2 et IS3 sont fixés à 20μA. Dans cet exemple, le rapport entre la résistance d'émetteur 32 du transistor T3 et la résistance de mesure de courant RM est de 3000. Ainsi, lorsque le courant I1 est égal à 5μA, le courant de ligne est en réalité de 15mA, valeur qui correspond au seuil de courant à partir duquel le courant d'alimentation de la diode électroluminescente commence à croître. Le courant IC est limité au maximum à la valeur de courant IS3, c'est-à-dire à 20μA, ce qui correspond à un courant de ligne de 75mA et représente la valeur du seuil de courant de ligne au-delà duquel la diode électroluminescente est alimentée à courant constant de 20mA.

La figure 4 montre l'allure du courant délivré par le générateur de courant programmable 25 en fonction du courant de ligne moyen IL, tandis que le courant ID alimentant la diode électroluminescente a la même allure que le courant de commande IC, mais dans une proportion 1000 fois plus élevée.

En se reportant à nouveau à la figure 2, on observe que l'amplificateur A2, le transistor T2 et la résistance d'émetteur 27 forment un amplificateur de type transconductance, transformant la tension d'entrée VC en un courant de sortie ID selon une proportion souhaitée, égale à 1000 dans l'exemple.

Le circuit selon l'invention, tel que décrit jusqu'à présent à l'aide des figures 1 à 4, assure une alimentation optimale d'une diode électroluminescente tout en ménageant une alimentation prioritaire des fonctions essentielles du circuit téléphonique relatives à la transmission. La chute de tension dans la diode électroluminescente est relativement élevée, de l'ordre de 2 volts, par rapport à la tension disponible entre le noeud 10 et l'extrémité de ligne L2. L'écart de tension aux bornes de la source de courant variable 20 n'est que de 1 à 2 volts en valeur moyenne. En tenant compte maintenant du signal alternatif présent sur la ligne, il peut se produire que l'écart de tension instantané aux bornes de la source de courant variable 20 soit insuffisant pour que cette source fonctionne convenablement. Dans ces circonstances, une distorsion inacceptable du signal alternatif peut se produire.

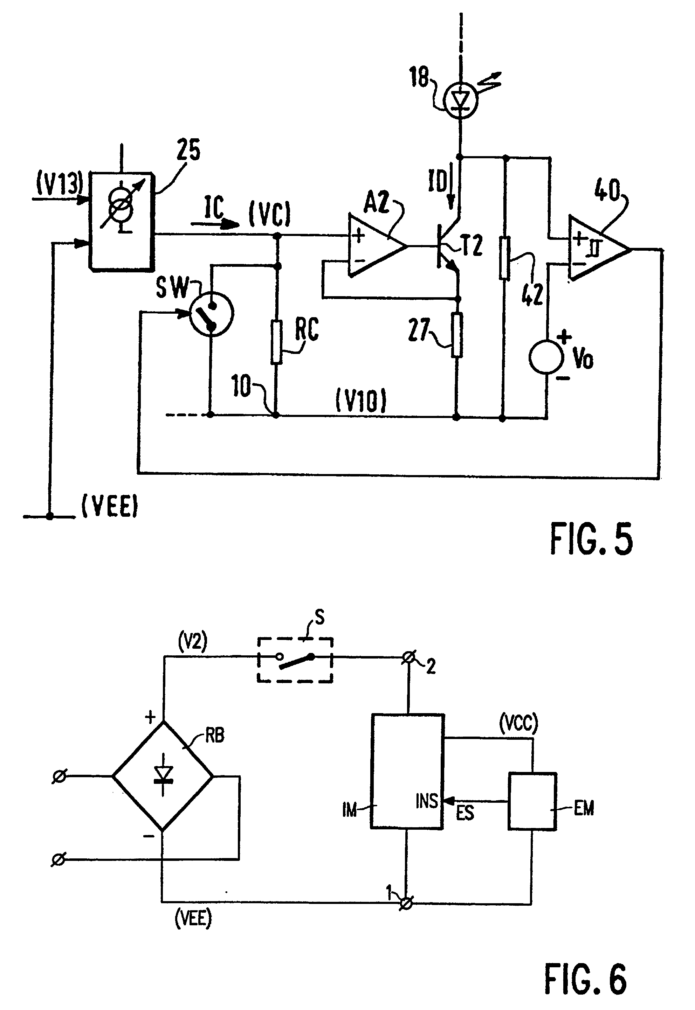

A l'aide de la figure 5, est décrit un mode de mise en oeuvre complémentaire de l'invention permettant d'interrompre le courant d'alimentation de la diode électroluminescente lorsque l'écart de tension aux bornes de la source d'alimentation variable devient insuffisant au cours du temps.

La figure 5 reprend pour l'essentiel les éléments décrits à la figure 2, éléments qui lorsqu'ils sont communs, sont affectés des mêmes signes de référence. La portion de circuit représentée à la figure 5 se distingue essentiellement de la portion équivalente représentée à la figure 2 du fait de l'addition d'un comparateur à hystérésis 40. A l'entrée non inverseuse de ce comparateur est appliquée la tension du collecteur du transistor T2, qui est comparée à une tension de seuil Vo appliquée à l'entrée inverseuse de ce comparateur. La sortie de ce comparateur 40 est couplée à un dispositif de blocage de la source de courant variable constitué, dans l'exemple, par la résistance de charge RC sur laquelle est disposé en shunt un interrupteur SW. Selon une variante de réalisation non représentée, c'est la sortie du comparateur 40 qui est connectée à la résistance de charge RC et est susceptible d'absorber le courant de commande IC.

Ainsi, lorsque la tension du collecteur du transistor T2 est inférieure à la tension de seuil Vo, le courant de commande IC peut être dévié directement vers le noeud 10, ce qui provoqué l'annulation de la tension de commande VC.

Il s'ensuit que l'amplificateur A2 commande le transistor T2 en blocage et le courant d'alimentation ID de la diode électroluminescente 18 est annulé d'une manière instantanée. Comme la tension collecteur du transistor T2 à tendance à s'élever à nouveau lorsque le courant dans la diode 18 est annulé, il est utile de prévoir une hystérésis relativement élevée dans l'opération de commutation du comparateur 40, ceci afin d'éviter une oscillation.

Selon un mode avantageux de réalisation représenté à la figure 5, une résistance additionnelle 42 est connectée en parallèle entre le collecteur du transistor T2 et le noeud 10, c'est-à-dire aux bornes de la source de courant d'alimentation. On évite ainsi une trop grande variation de la chute de tension dans la diode 18 lorsque le courant collecteur du transistor T2 est brusquement annulé. La valeur de la résistance 42 peut être relativement élevée, et par exemple choisie pour qu'au moment de la suppression du courant ID fourni par le collecteur du transistor T2, le courant traversant alors cette résistance ne soit qu'une fraction de l'ordre de 1/200 du courant ID fourni précédemment. Lorsque le courant d'alimentation de la diode 18 est momentanément supprimé, un courant équivalent au courant supprimé, est instantanément ajouté au courant traversant le transistor T1 assurant la régulation de la tension de ligne.

On constate expérimentalement qu'une telle commutation de courant entre la source de courant variable et le transistor régulateur T1 ne produit pas de perturbation mesurable du signal alternatif transmis sur la ligne et que la distorsion mesurée de ce signal reste très inférieure à 1%.

La figure 6 représente très schématiquement un poste téléphonique mettant en oeuvre un circuit conforme à l'invention. Un tel poste téléphonique comprend :

. un pont redresseur RB présentant deux bornes destinées chacune à être reliée à l'un des fils constituant la ligne téléphonique, et une borne positive et une borne négative entre lesquelles le pont diviseur RB délivre une tension positive,

. un interrupteur S présentant une première borne reliée à la borne positive du pont diviseur RB et une deuxième borne,

. un module IM dit d'interface présentant une première borne 1 d'alimentation reliée à la borne négative du pont diviseur RB, une deuxième borne 2 d'alimentation reliée à la deuxième borne de l'interrupteur S et une borne de sortie destinée à délivrer une tension locale d'alimentation VCC, module d'interface IM destiné à transmettre des signaux vers la ligne téléphonique et présentant à cet effet une borne d'entrée INS,

. un module EM dit émetteur présentant une première borne d'alimentation reliée à la borne négative du pont diviseur RB et une deuxième borne d'alimentation reliée à la borne de sortie du module d'interface IM, et une borne de sortie destinée à délivrer un signal d'émission ES.

Le module d'interface IM, dont un schéma simplifié est représenté à la figure 1, comporte :

. un circuit 100 tel que décrit plus haut, dans lequel le trajet de courant du transistor régulateur T1, en série avec la résistance de mesure du courant de ligne RM, forme une branche disposée entre les première et deuxième bornes d'alimentation 1 et 2, le transistor régulateur T1 étant commandé au moyen du signal d'émission ES issu du module émetteur EM et reçu sur la borne d'entré INS du module d'interface IM, et

. une résistance R1 et un condensateur C2 disposés en série entre la première et la deuxième bornes d'alimentation 1 et 2, le noeud intermédiaire entre la résistance R1 et le condensateur C2 constituant la borne de sortie du module d'interface IM.

**Revendications**

1. Circuit pour un appareil destiné à être connecté à une ligne téléphonique (L1,L2), comportant un dispositif d'alimentation par la ligne (L1,L2) d'une diode électro-luminescente (18) servant d'indicateur de fonctionnement, appareil qui est également muni d'un transistor régulateur (T1) dont le trajet de courant est en série avec une résistance (RM) de mesure de courant de ligne (IL), **caractérisé en ce que** le trajet de courant du transistor régulateur (T1) forme une branche disposée en parallèle sur la ligne (L1,L2), transistor régulateur (T1) qui fixe aux bornes de son trajet principal de courant une tension de valeur moyenne constante,

**en ce que** le dispositif d'alimentation comprend une source de courant variable (20) en série avec la diode électro-luminescente (18), l'ensemble de ces deux éléments étant connecté en parallèle sur le trajet principal de courant du transistor régulateur (T1), et **en ce que** la source de courant variable (20), recevant un signal de contrôle déduit de la chute de tension dans la résistance (RM) de mesure de courant de ligne (IL), est agencée pour débiter un courant d'alimentation (ID) ayant une valeur nominale prédéterminée lorsque le courant de ligne moyen est égal ou supérieur à un seuil de courant, et pour ne pas débiter lorsque le courant de ligne moyen est inférieur audit seuil de courant.

2.  Circuit pour un appareil destiné à être connecté à une ligne téléphonique (L1,L2), comportant un dispositif d'alimentation par la ligne (L1,L2) d'une diode électro-luminescente (18) servant d'indicateur de fonctionnement, appareil qui est également muni d'un transistor régulateur (T1) dont le trajet de courant est en série avec une résistance (RM) de mesure de courant de ligne (IL), **caractérisé en ce que** le trajet de courant du transistor régulateur (T1) forme une branche disposée en parallèle sur la ligne (L1,L2), transistor régulateur (T1) qui fixe aux bornes de son trajet principal de courant une tension de valeur moyenne constante,

    **en ce que** le dispositif d'alimentation comprend une source de courant variable (20) en série avec la diode électro-luminescente (18), l'ensemble de ces deux éléments étant connecté en parallèle sur le trajet principal de courant du transistor régulateur (T1),

    et **en ce que** la source de courant variable (20), est agencée pour débiter un courant d'alimentation (ID) maximum prédéterminé lorsque le courant de ligne moyen est égal ou supérieur à un premier seuil de courant, pour ne pas débiter lorsque le courant de ligne moyen est égal ou inférieur à un deuxième seuil de courant, qui est inférieur au premier seuil, et pour débiter un courant d'alimentation (ID) variant avec ie courant de ligne moyen entre le premier et le deuxième seuil de courant.

3.  Circuit selon la revendication 2, **caractérisé en ce que** la valeur du courant (ID) débité par la source de courant variable (20) est une fonction linéaire du courant de ligne moyen entre le premier et le deuxième seuil de courant.

4.  Circuit selon la revendication 3, **caractérisé en ce**

**que** la source de courant variable (20) comprend un générateur de courant ajustable (25) par le signal de contrôle, fournissant en sortie un courant dit de commande (IC) dans une résistance de charge (RC), ainsi qu'un amplificateur (A2) de type transconductance, dont une entrée est couplée à la résistance de charge (RC) et qui délivre en sortie un courant constituant le courant d'alimentation (ID) de la diode électro-luminescente, proportionnel au dit courant de commande (IC).

5.  Circuit selon la revendication 4, **caractérisé en ce qu'**il comporte en outre un comparateur (40) recevant en entrée la valeur de la chute de tension instantanée aux bornes de la source de courant variable (20), chute de tension à comparer à un seuil de tension, et **en ce que** la sortie du comparateur (40) est couplée à un dispositif de blocage de la source de courant variable (20) qui provoque la suppression du courant délivré par cette source de courant variable (20) lorsque la chute de tension instantanée aux bornes de celle-ci est inférieure au dit seuil de tension.

6.  Circuit selon la revendication 5, **caractérisé en ce que** le comparateur (40) est à effet d'hystérésis et **en ce que** le dispositif de blocage est constitué par ladite résistance de charge (RC) dont la chute de tension peut être annulée par la sortie du comparateur (40).

7.  Circuit selon la revendication 6, **caractérisé en ce qu'**il comporte une résistance (42) disposée en shunt aux bornes de la source de courant variable (20).

8.  Poste téléphonique destiné à être connecté à une ligne téléphonique bifilaire (L1,L2) comprenant :

    .   un pont redresseur (RB) présentant deux bornes destinées chacune à être reliée à l'un des fils constituant la ligne téléphonique (L1,L2), et une borne positive et une borne négative entre lesquelles le pont diviseur (RB) délivre une tension positive,

    .   un interrupteur (S) présentant une première borne reliée à la borne positive du pont diviseur (RB) et une deuxième borne,

    .   un module dit d'interface (IM) présentant une première borne d'alimentation reliée à la borne négative du pont diviseur (RB), une deuxième borne d'alimentation reliée à la deuxième borne de l'interrupteur et une borne de sortie destinée à délivrer une tension locale d'alimentation (VCC), module d'interface (IM) destiné à transmettre des signaux vers la ligne téléphonique (L1,L2) et présentant à cet effet une borne d'entrée (INS),

. un module dit émetteur (EM) présentant une première borne d'alimentation reliée à la borne négative du pont diviseur (RB) et une deuxième borne d'alimentation reliée à la borne de sortie du module d'interface (IM), et une borne de sortie destinée à délivrer un signal d'émission (ES),

**caractérisé en ce que** le module d'interface (IM) comporte :

. un circuit (100) conforme à l'une quelconque des revendications 1 à 7, dans lequel le trajet de courant du transistor régulateur (T1), en série avec la résistance (RM) de mesure du courant de ligne (IL), forme une branche disposée entre les première et deuxième bornes d'alimentation, le transistor régulateur (T1) étant commandé au moyen du signal d'émission (ES) issu du module émetteur (EM) et reçu sur la borne d'entrée (INS) du module d'interface (IM), et

. une résistance (R1) et un condensateur (C2) disposés en série entre la première et la deuxième bornes d'alimentation, le noeud intermédiaire entre la résistance (R1) et le condensateur (C2) constituant la borne de sortie du circuit d'interface (IM).

**Patentansprüche**

1. Schaltung für ein Gerät zum Anschluss an eine Fernsprechleitung (L1,L2) mit einer Vorrichtung, um über die Leitung (L1,L2) eine Leuchtdiode (18) mit Strom zu versorgen, die als Betriebsanzeige dient, wobei das Gerät außerdem mit einem Regeltransistor (T1) versehen ist, dessen Stromweg in Serie mit einem Widerstand (RM) zur Messung des Leitungsstroms (IL) geschaltet ist, **dadurch gekennzeichnet, dass** der Stromweg des Regeltransistors (T1) einen parallel zur Leitung (L1,L2) angeordneten Zweig bildet, wobei der Regeltransistor (T1) an den Klemmen seines Hauptstromwegs eine Spannung konstanten durchschnittlichen Werts festlegt,
dass die Versorgungsvorrichtung eine variable Stromquelle (20) in Serie mit der Leuchtdiode (18) enthält, Struktur dieser Elemente parallel zum Hauptstromweg des Regeltransistors (T1) angeschlossen ist, und dass die variable Stromquelle (20), die ein Steuersignal erhält, das von dem Spannungsabfall in dem Widerstand (RM) zur Messung des Leitungsstroms (IL) abgeleitet wird, angeordnet ist, um einen Versorgungsstrom (ID) abzugeben, der einen vorbestimmten Nennwert hat, wenn der durchschnittliche Leitungswert gleich oder größer der einer Stromschwelle ist, und um keinen Strom abzugeben, wenn der durchschnittliche Leitungswert unter die besagte Stromschwelle kommt.

2. Schaltung für ein Gerät zum Anschluss an eine Fernsprechleitung (L1,L2) mit einer Vorrichtung, um über die Leitung (L1,L2) eine Leuchtdiode (18) mit Strom zu versorgen, die als Betriebsanzeige dient, wobei das Gerät außerdem mit einem Regeltransistor (T1) versehen ist, dessen Stromweg in Serie mit einem Widerstand (RM) zur Messung des Leitungsstroms (IL) geschaltet ist, **dadurch gekennzeichnet, dass** der Stromweg des Regeltransistors (T1) einen parallel zur Leitung (L1,L2) angeordneten Zweig bildet, wobei der Regeltransistor (T1) an den Klemmen seines Hauptstromwegs eine Spannung konstanten durchschnittlichen Werts festlegt,
dass die Versorgungsvorrichtung eine variable Stromquelle (20) in Serie mit der Leuchtdiode (18) enthält, Struktur dieser Elemente parallel zum Hauptstromweg des Regeltransistors (T1) angeschlossen ist, und dass die variable Stromquelle (20) angeordnet ist, um einen vorbestimmten maximalen Versorgungsstrom (ID) abzugeben, wenn der durchschnittliche Leitungswert gleich oder größer dessen einer ersten Stromschwelle ist, und um keinen Strom abzugeben, wenn der durchschnittliche Leitungswert gleich oder kleiner dessen einer zweiten Stromschwelle ist, die unter der ersten Stromschwelle liegt, und um einen Versorgungsstrom (ID) abzugeben, der mit dem durchschnittlichen Leitungswert zwischen der ersten und der zweiten Stromschwelle variiert.

3. Schaltung nach Anspruch 2, **dadurch gekennzeichnet, dass** der Wert des von der variablen Stromquelle (20) abgegebenen Stroms (ID) einer linearen Funktion des durchschnittlichen Leitungsstroms zwischen der ersten und der zweiten Stromschwelle entspricht.

4. Schaltung nach Anspruch 3, **dadurch gekennzeichnet, dass** die variable Stromquelle (20) einen über das Steuersignal einstellbaren Stromgenerator (25) enthält, der am Ausgang einen so genannten Steuerstrom (IC) an einen Ladewiderstand (RC) abgibt, sowie einen Verstärker (A2) vom Steilheitstyp, dessen einer Eingang an den Ladewiderstand (RC) gekoppelt ist und am Ausgang einen Strom abgibt, der den zum besagten Steuerstrom (IC) proportionalen Versorgungsstrom (ID) der Leuchtdiode bildet.

5. Schaltung nach Anspruch 4, **dadurch gekennzeichnet, dass** sie außerdem einen Vergleicher (40) aufweist, der am Eingang den Wert des momentanen Spannungsabfalls an den Klemmen der variablen Stromquelle (20) erhält, eine mit der Spannungsschwelle zu vergleichende Stromschwelle, und dass der Ausgang des Vergleichers (40) an eine Vorrichtung zum Sperren der variablen Stromquelle (20) gekoppelt ist, die die Auslöschung des von dieser variablen Stromquelle (20) abgegebenen Stroms bewirkt, wenn der momentane Spannungsabfall an deren Klemmen unter die besagte Spannungsschwelle kommt.

6. Schaltung nach Anspruch 5, **dadurch gekennzeichnet, dass** ist der Vergleicher (40) mit Hysterese-Effekt ist und die Sperrvorrichtung aus dem besagten Ladewiderstand (RC) gebildet wird, dessen Spannungsabfall vom Ausgang des Vergleichers (40) storniert werden kann.

7. Schaltung nach Anspruch 6, **dadurch gekennzeichnet, dass** sie an den Klemmen der variablen Stromquelle (20) einen als Shunt angeordneten Widerstand 42 aufweist.

8. Fernsprechgerät für den Anschluß an eine zweiadrige Fernsprechleitung (L1,L2), das:

   . eine Gleichrichterbrücke (RB) mit zwei Klemmen für den jeweiligen Anschluss an eines der die Fernsprechleitung (L1,L2) bildenden Kabel, und eine positive Klemme und eine negative Klemme, zwischen denen die Teilerbrücke (RB) eine positive Spannung abgibt,
   . einen Unterbrecher (S) mit einer ersten Klemme, verbunden mit der positiven Klemme der Teilerbrücke (RB), und einer zweiten Klemme,
   . ein sogenanntes Schnittstellenmodul (IM) mit einer ersten Versorgungsklemme, verbunden mit der negativen Klemme der Teilerbrücke (RB), einer zweite Versorgungsklemme, verbunden mit der zweiten Klemme des Unterbrechers, und eine Ausgangsklemme zur Abgabe einer lokalen Versorgungsspannung (VCC), dafür bestimmtes Schnittstellenmodul (IM), Signale zur Fernsprechleitung (L1,L2) zu übertragen und das zu diesem Zweck eine Eingangsklemme (INS) aufweist,
   . ein sogenanntes Emittermodul (EM) mit einer ersten Versorgungsklemme, mit der negativen Klemme der Teilerbrücke (RB) verbunden, und einer zweiten Versorgungsklemme, mit der Ausgangsklemme des Schnittstellenmoduls (IM) verbunden, und eine Ausgangsklemme zur Abgabe eines Sendesignals (ES),

   **Dadurch gekennzeichnet, dass** das Schnittstellenmodul (IM) enthält:

   . eine Schaltung (100) laut einem der Ansprüche 1 bis 7, in der der Stromweg des Regeltransistors (T1), in Serie mit dem Widerstand (RM) zum Messen des Leitungsstroms (IL), einen zwischen der ersten und der zweiten Versorgungsklemme angeordneten Zweig bildet, wobei der Regeltransistor (T1) von dem aus dem Sendemodul (EM) kommenden Sendesignal (ES) gesteuert wird, das an der Eingangsklemme (INS) des Schnittstellenmoduls (IM) erhalten wird, und
   . einen Widerstand (R1) und einem Kondensator (C2), in Serie zwischen der ersten und der zweiten Versorgungsklemme angeordnet, wobei der Zwischenknoten zwischen dem Widerstand (R1) und dem Kondensator (C2) die Ansgangsklemme des Schnittstellenmoduls (IM) bildet.

## Claims

1. A circuit for a device intended to be connected to a telephone line (L1, L2), comprising a power supply device for supplying power via the line (L1,L2) of a light-emitting diode (18) used as an operation indicator, the device also comprising a regulating transistor (T1) whose current path is connected in series with a line current (IL) measuring resistor (RM), **characterized in that** the current path of the regulating transistor (T1) forms a branch running parallel with the line (L1,L2), which regulating transistor (T1) determines at the terminals of its main current path a constant voltage of average value, **in that** the power supply device comprises a variable current source (20) connected in series with the light-emitting diode (18), the ensemble of these two elements being connected in parallel with the main current path of the regulating transistor (T1), and **in that** the variable current source (20), receiving a monitoring signal derived from the voltage drop in the line current (IL) measuring resistor (RM), is arranged for delivering a given nominal supply current (ID) when the average line current is equal to or higher than a first current threshold, for not delivering current when the average line current is lower than said current threshold.

2. A circuit for a device intended to be connected to a telephone line (L1,L2), comprising a power supply device for supplying power via the line (L1,L2) of a light-emitting diode (18) used as an operation indicator, the device also comprising a regulating transistor (T1) whose current path is connected in series with a line current (IL) measuring resistor (RM), **characterized in that** the current path of the regulating transistor (T1) forms a branch running parallel with the line (L1,L2), which regulating transistor (T1) determines at the terminals of its main current path a constant voltage of average value, **in that** the power supply device comprises a variable current source (20) connected in series with the light emitting diode (18), the ensemble of these two elements being connected in parallel with the main current path of the regulating transistor (T1), and **in that** the variable current source (20) is arranged for delivering a given maximum supply current (ID) when the average line current is equal to or higher than a first current threshold, for not delivering when the average line current is equal to or lower than a second current threshold, which is lower than the first threshold, and for delivering a variable supply current (ID) which varies with the average line current between the first and second current thresholds.

3. A circuit as claimed in Claim 2, **characterized in that** the value of the current (ID) delivered by the variable current source (20) is a linear function of the average line current between the first and second current thresholds.

4. A circuit as claimed in Claim 3, **characterized in that** the variable current source (20) comprises a current generator which can be adjusted (25) via the monitoring signal, which generator produces on its output a current called control current (IC) in a load resistor (RC), and an amplifier (A2) of the transconductance type of which an input is coupled to the load resistor (RC) and which delivers on its output a current which forms the supply current (ID) of the light-emitting diode, which is proportional to said control current (IC).

5. A circuit as claimed in Claim 4, **characterized in that** it further comprises a comparator (40) receiving on its input the value of the instantaneous voltage drop at the terminals of the variable current source (20), which voltage drop is compared to a voltage threshold, and **in that** the output of the comparator (40) is coupled to a blocking device for blocking the variable current source (20) which causes the suppression of the current delivered by this variable current source (20) when the instantaneous voltage drop at the terminals of this current source is lower than said voltage threshold.

6. A circuit as claimed in Claim 5, **characterized in that** the comparator (40) is a hysteresis effect comparator and **in that** the blocking device is formed by said load resistor (RC) of which the voltage drop maybe canceled via the output of the comparator (40).

7. A circuit as claimed in Claim 6, **characterized in that** it comprises a resistor (42) connected in shunt to the terminals of the variable current source.

8. A telephone intended to be connected to a two-wire telephone line (L1,L2), comprising:

- a rectifier bridge (RB) which has two terminals, each one intended to be connected to one of the wires forming the telephone line (L1,L2), and a positive and a negative terminal between which the divider bridge (RB) delivers a positive voltage,
- a switch (S) which has a first terminal connected to the positive terminal of the divider bridge (RB) and a second terminal,
- a module called interface module (IM) which has a first supply terminal connected to the negative terminal of the divider bridge (RB), a second supply terminal connected to the second terminal of the switch and an output terminal intended to deliver a local supply voltage (VCC), which interface module (IM) is intended to transmit signals to the telephone line (L1,L2) and therefore has an input terminal (INS),
- a module called emitter module (EM) which has a first supply terminal connected to the negative terminal of the divider bridge (RB) and a second supply terminal connected to the output terminal of the interface module (IM), and an output terminal intended to deliver a transmit signal (ES), **characterized in that** the interface module (IM) comprises:

- a circuit (100) as claimed in one of the claims 1 to 7, in which the current path of the regulating transistor (T1), connected in series with the line current (IL) measuring resistor (RM), forms a circuit inserted between the first and second supply terminals, the regulating transistor (T1) being controlled by the transmit signal (ES) coming from the transmitting module (EM) and received on the input terminal (INS) of the interface module (IM), and
- a resistor (R1) and a capacitor (C2) connected in series between the first and second supply terminals, the node between the resistor (R1) and the capacitor (C2) forming the output terminal of the interface module (IM).

**11**

FIG. 1

FIG. 2

FIG. 3

FIG. 4

FIG. 5

FIG. 6